**Europäisches Patentamt**

**European Patent Office**

**Office européen des brevets**

(19)

(11) Numéro de publication: **0 161 199**
**B1**

(12) **FASCICULE DE BREVET EUROPEEN**

(45) Date de publication du fascicule du brevet:
**26.10.88**

(21) Numéro de dépôt: **85460007.9**

(22) Date de dépôt: **21.03.85**

(51) Int. Cl.⁴: **A 21 B 3/02**

(54) **Four à recyclage d'air chaud.**

(30) Priorité: **27.03.84 FR 8404978**

(43) Date de publication de la demande:
**13.11.85 Bulletin 85/46**

(45) Mention de la délivrance du brevet:
**26.10.88 Bulletin 88/43**

(84) Etats contractants désignés:
**AT BE CH DE GB IT LI LU NL SE**

(56) Documents cités:
**DE - A - 3 326 895**
**FR - A - 1 173 837**
**FR - A - 2 529 443**
**US - A - 1 944 061**

(73) Titulaire: **Palomba, Joseph, 32, rue Gabriel Lelong,
F-28000 Chartres (FR)**

(72) Inventeur: **Palomba, Joseph, 32, rue Gabriel Lelong,
F-28000 Chartres (FR)**

(74) Mandataire: **Le Guen, Louis François, CABINET Louis LE
GUEN 38, rue Levavasseur B.P. 91, F-35802 Dinard
Cédex (FR)**

**Description**

La présente invention concerne un type de four à recyclage d'air chaud destiné à toute cuisson de produits alimentaires tels que ceux utilisés par les boulangers, pâtissiers, charcutiers et restaurateurs.

Dans la cuisson du pain utilisant le principe du four romain, la pâte est déposée nue sur une sole chaude. La majeure partie des fours à pain actuels respecte encore ce principe, avec des innovations portant principalement sur le chauffage en continu et la facilité à enfourner ou défourner.

A l'exception des fours à chariot, les structures des fours à pain se sont peu allégées, les encombrements au sol n'ont guère diminué et l'immobilité par ancrage au sol est restée la règle.

Un objet de l'invention est d'améliorer ces trois postes, légèreté, occupation au sol, mobilité, en conservant les avantages de la cuisson traditionnelle et en apportant des avantages décisifs sur les manipulations de transfert du pain.

Dans les fours à soles superposées les plus utilisés, la face avant comporte des ouvertures longitudinales superposées obturées par des portes sur plusieurs niveaux, la première sole étant généralement à 70 ou 80 cm du sol et la hauteur des portes étant de l'ordre de 25 cm. Comme il est difficile et quasiment impossible d'enfourner et de défourner à plus de 1,80 m du sol, il n'est pratiquement pas possible de prévoir plus de trois portes. De plus, il est difficile de nettoyer et entretenir l'intérieur et le fond du four par suite du manque d'accessibilité. Enfin, la dimension et la nature des produits admis à la cuisson sont limitées, en excluant les produits ayant une hauteur supérieure à celle d'une porte. La sortie des produits ayant une cote très proche de celle d'une porte, le levage de la pâte provoqué par la cuisson étant parfaitement aléatoire, devient également aléatoire.

Dans le four de cuisson décrit dans le document US-A-1 944 061, il est prévu une ouverture unique d'enfournement qui est obturée par une série de battants de portes longitudinales superposées. Le bord inférieur d'un battant est recouvert par le bord supérieur du battant immédiatement inférieur d'une manière pratiquement étanche. Ces battants ne peuvent pivoter que de 90°, horizontalement vers le bas, ce qui ne permet pas d'utiliser les dispositifs d'enfournement d'usage courant dans les fours à pain.

Un objet de la présente invention consiste à prévoir un four dont l'intérieur soit facilement accessible notamment en utilisant des dispositifs d'enfournement et qui permette aussi de cuire des produits de grande dimension.

Ces objets de l'invention sont atteints par la mise en œuvre de combinaisons de moyens définis dans les revendications complétant la présente description.

L'invention apparaîtra plus clairement à la lecture de la description suivante d'un exemple de réalisation, ladite description étant faite en relation avec les dessins joints, parmi lesquels:

la Fig. 1 est une vue de face de la porte principale d'un four à ouverture d'enfournement uniquement obturée par une série de battants de portes longitudinales superposées.

la Fig. 2 est une vue en coupe verticale de la porte principale de la Fig. 1 selon la ligne A–A,

la Fig. 3 est une vue en coupe verticale, selon la ligne A–A de la Fig. 1, d'une partie du four correspondant à une partie de la porte principale avant et à une porte (ou série de portes) arrière,

la Fig. 4 est une vue en perspective de deux portes secondaires avant, la porte secondaire inférieure étant ouverte, et la barre d'un des systèmes d'enfournement étant engagées dans les étriers supports solidaires de la porte principale,

la Fig. 5 est une vue de profil des portes secondaires illustrées à la Fig. 4, et

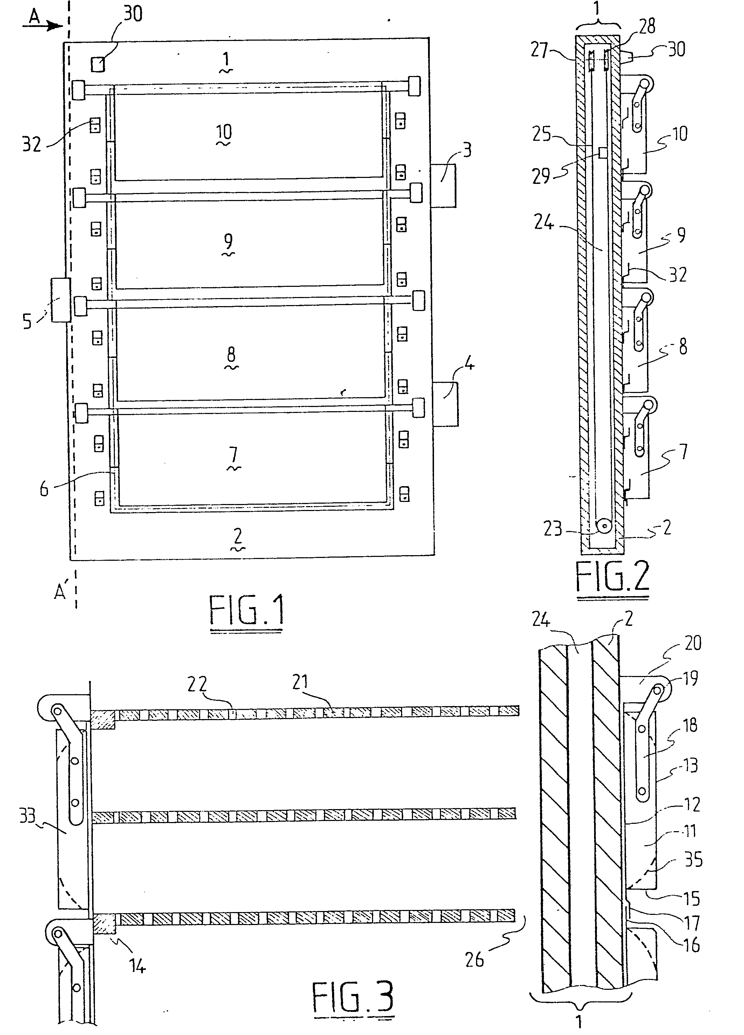

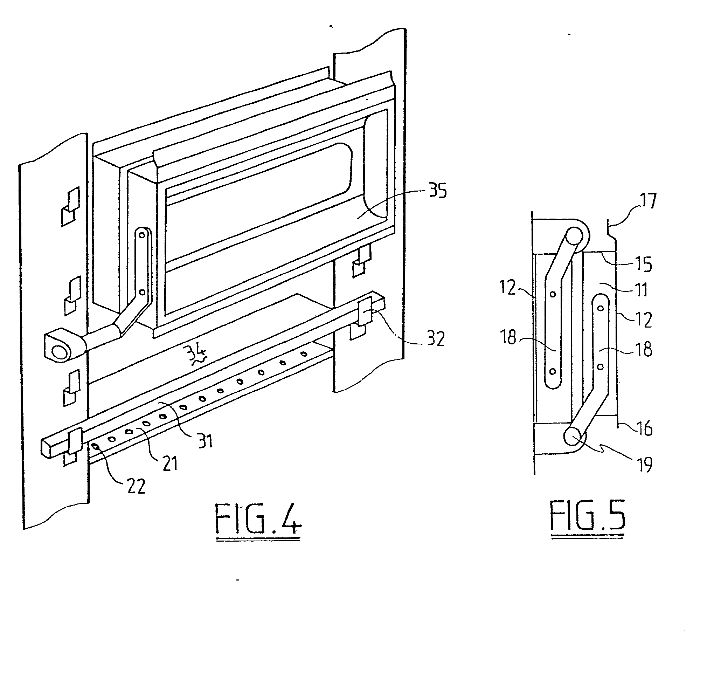

A la Fig. 1, on a représenté isolément la porte principale 1 d'un four. La porte 1 comporte un cadre rectangulaire 2 avec, sur un côté vertical, deux charnières 3 et 4 et, sur l'autre côté, un système de verrouillage 5. Le cadre 2 délimite une ouverture rectangulaire 6 dans la porte principale 1. L'ouverture 6 est obturée par quatre battants de portes secondaires 7 à 10. Les battants des portes 7 à 10 sont de forme rectangulaire et d'une largeur supérieure à celle de l'ouverture 6. Le profil ou côté latéral 11 des portes 7 à 10, illustré aux Figs. 3 et 4, a la forme générale d'un rectangle.

Quand les portes 7 à 10 sont fermées, c'est-à-dire verticales, leurs faces interne 12 et externe 13 sont elles-mêmes verticales. Le prolongement supérieur 16 de la face interne 12 est recouvert par le prolongement inférieur 17 de la face interne 12 appartenant à la porte secondaire immédiatement supérieure.

Les parties inférieures de pentures métalliques 18 sont fixées sur la partie supérieure des deux flancs verticaux 11 des portes secondaires 7 à 10. Les parties supérieures des pentures 18 sont infléchies vers l'extérieur de façon à permettre le passage des axes de rotation 19, et de façon à ce que l'écartement entre les extrémités supérieures des pentures 18 de chaque porte secondaire soit supérieur à la largeur de chaque porte. La rotation des portes secondaires se fait autour des axes 19 solidaires des pentures 18 et supportés par des paliers 20 montés sur les montants du cadre de la porte principale 1. On notera que l'infléchissement des pentures 18, qui correspond à un écartement sensible entre les axes 19 et la face avant de la porte 1, entraîne que les portes secondaires 7 à 10 se plaquent contre la porte 1 quand elles sont verticales.

Les Figs. 4 et 5 illustrent le relevage d'une porte secondaire inférieure venant se rabattre contre la porte secondaire immédiatement supérieure, ce qui libère une ouverture d'enfournement égale à une fois la hauteur de la porte secondaire.

En variante, une position alternée des pentures pour deux portes secondaires voisines (position haute pour la première porte, position basse pour la seconde porte) permet d'avoir des axes de pivotement écartés de deux fois la hauteur des portes secondaires.

On voit à la Fig. 3 que les portes 7 à 10 ont une hauteur telle qu'elles desservent chacune deux étages ou soles 21 du four, la hauteur de chaque étage équivalant à la moitié de celle généralement utilisée en boulangerie. Dans la version des pentures alternées, l'ouverture simultanée de deux portes secondaires voisines donne accès à quatre étages ou soles 21.

Les portes 7 à 10 se succédant de façon ininterrompue occupent une hauteur de four réduite au strict minimum et aucune cloison séparative entre les portes 7 à 10 permet de réduire la hauteur de chaque étage à 10 cm environ, ce qui correspond à une hauteur de porte secondaire de 20 cm environ. Ainsi la sole la plus haute se trouve à 1,50 m, ce qui est tout à fait pratique. Comme les portes 7 à 10 ouvrent vers l'extérieur sur 180°, on supprime les risques de brûlure lors des enfournements et défournements, puisque le dégagement des ouvertures est total au cours de l'accès aux deux ou quatre soles.

L'épaisseur de la porte ou huisserie 1 étant de l'ordre de 50 mm, une veine d'air ininterrompue est créée qui s'étale sur toute la surface couverte par les portes secondaires 7 à 10. A cette veine d'air, s'ajoute celle qui correspond à la concavité 35 de chacune des portes secondaires.

Les soles 21, Fig. 3, sont des plaques métalliques peu épaisses percées de trous 22 de préférence régulièrement disposés sur toute leur surface. Les trous 22 ont un diamètre de 3 mm environ. La superficie des trous 22 représente de 40 à 64%, par exemple, de la superficie totale d'une sole. Ainsi, l'inertie totale de chaque sole est faible et le pain est mieux chauffé par-dessous. Les soles 21 sont amovibles. Il peut y avoir un espace entre leurs bords avant et la paroi interne de la porte 1 pour encore élargir la veine d'air chaud le long de la porte.

Dans le système d'enfournement qu'on voit à la Fig. 2 et qui se met en place derrière les portes secondaires 7 à 10, les extrémités d'une barre d'accrochage 29 coulissent dans deux glissières verticales aménagées au creux des montants du cadre 2 de la porte principale 1. Les extrémités de la barre d'accrochage 29 à griffes sont solidarisées avec les extrémités d'un câble 25 mobile tendu sur des poulies de renvoi 23, 27 et 28. L'organe de commande 30 du mouvement du câble 25 est placé sur la face extérieure de la porte principale 1, de préférence au niveau de la poulie 28. Cet organe de commande 30 peut être manuel ou électrique.

Dans le système d'enfournement illustré à la Fig. 4 et se mettant en place devant les portes secondaires 7 à 10, les extrémités d'une barre d'accrochage 31 prolongée par une face d'accrochage 34 de largeur légèrement inférieure à l'ouverture de la porte principale viennent se placer dans des étriers 32 en forme de U ouvert vers le haut et solidarisés avec les montants de la porte principale 1.

Des portes tertiaires 33, symétriques des portes secondaires, peuvent être aménagées au fond du four pour donner à celui-ci les caractéristiques d'un four traversant. Elles seraient dotées de joints 14 assurant une étanchéité parfaite et d'un mécanisme ne permettant leur ouverture que lorsque les portes secondaires seraient fermées.

## Revendications

1. Four de cuisson pour aliments comprenant une unique ouverture d'enfournement (6) qui est obturée par une série de battants de petites portes longitudinales superposées (7, 8, 9, 10), le bord inférieur (17) d'un battant recouvrant le bord supérieur (16) du battant immédiatement inférieur d'une manière pratiquement étanche, caractérisé en ce que les battants des portes (7, 8, 9, 10) pivotent de 180° vers l'extérieur autour d'axes horizontaux, l'axe horizontal d'une porte se trouvant au-dessus de celle-ci tandis que l'axe horizontal de la porte voisine se trouve au-dessous de celle-là.

2. Four selon la revendication 1, caractérisé en ce qu'un intervalle (26) sépare le bord avant de chaque sole (21) du four et le plan de face intérieure des portes (7, 8, 9, 10).

3. Four selon la revendication 1 ou 2, caractérisé en ce que le pourtour de l'ouverture d'enfournement (6) fait partie du battant d'une porte principale (1) et en ce que les extrémités d'une barre horizontale (29) prévue pour l'accrochage d'un dispositif d'enfournement coulissent dans des rainures (24) des montants verticaux de la porte principale (1), des moyens (25, 26, 27, 28) étant prévus pour déplacer la barre (29) derrière les portes (7, 8, 9, 10).

4. Four de cuisson de pain suivant l'une des revendications 1 à 3, caractérisé en ce que les soles (21) sont des plaques relativement fines et perforées, le diamètre des perforations (22) étant de l'ordre de 2 à 3 mm, les perforations occupant de 40 à 64% de la surface de la sole.

5. Four selon l'une des revendications 1 à 4, caractérisé en ce que le fond du four est équipé d'un ensemble de portes symétriques des petites portes (7, 8, 9, 10).

## Claims

1. A oven for cooking food products comprising a single loading opening (6) which is closed by a series of folds of small longitudinal superimposed doors (7, 8, 9, 10), the lower edge (17) of a fold covering the upper edge (16) of the next lower edge in a substantially sealing manner, characterized in that the folds of the doors (7, 8, 9, 10) are rotatable by 180° towards the outside about horizontal axes, the horizontal axis of a door being located above the said door while the horizontal axis of the next door is located below the said next door.

2. An oven in accordance with claim 1, characterized in that a gap (26) separates the front edge of each plate (21) and the inside face plane of the doors (7, 8, 9, 10).

3. An oven in accordance with claims 1 or 2, characterized in that the circumference of the loading opening (6) is part of the fold of a main door (1) and in that the ends of horizontal hook-up bar (29) provided for holding the loading apparatus are slidable inside grooves (24) in the upright posts of the main door (1), means (25, 26, 27, 28) being provided to move the bar (29) behind the doors (7, 8, 9, 10).

4. An oven for cooking bread in accordance with one of claims 1 to 3, characterized in that the plates (21) are relatively thin perforated plates, the apertures (22) generally having a diameter of the order of 2 mm to 3 mm, the apertures representing 40% to 64% of the area of the plate.

5. An oven in accordance with one of claims 1 to 4, characterized in that the back of the oven is equipped with a set of symmetrical doors of the small doors (7, 8, 9, 10).

**Patentansprüche**

1. Backofen mit Heissluftumwälzung zum Kochen von Nahrungsmitteln, mit einer einzigen Eingabeöffnung (6), die durch eine Anzahl von Flügeln von kleinen längsverlaufenden, übereinanderliegenden Türen (7, 8, 9, 10) geschlossen ist, wobei der untere Rand (17) eines Flügels den oberen Rand (16) des nächsten darunterliegenden Flügels praktisch dicht überdeckt, dadurch gekennzeichnet, dass die Flügel der Türen (7, 8, 9, 10) um 180° nach aussen um horizontale Achsen schwenkbar sind, und dass die horizontale Achse einer Tür oberhalb dieser Tür liegt, während die horizontale Achse der nächsten Tür unterhalb dieser nächsten Tür liegt.

2. Backofen nach Anspruch 1, dadurch gekennzeichnet, dass der vordere Rand jeder Platte (21) und die innere Stirnfläche der Türen (7, 8, 9, 10) durch einen Spalt (26) getrennt ist.

3. Backofen nach Anspruch 1 oder 2, dadurch gekennzeichnet, dass der Umfang der Eingabeöffnung (6) Teil des Flügels einer Haupttür (1) ist, dass ferner die Enden einer horizontalen Einhängestange (29) zum Halen einer Eingabeeinrichtung in Nuten (24) in den aufrechten Trägern der Haupttür (1) verschiebbar sind, und dass Einrichtungen (25, 26, 27, 28) vorgesehen sind, um die Stange (29) hinter die Türen (7, 8, 9, 10) zu schieben.

4. Backofen zum Backen von Brot nach einem der Ansprüche 1–3, dadurch gekennzeichnet, dass die Platten (21) relativ dünne perforierte Platten sind, dass die Löcher (22) im wesentlichen einen Durchmesser in der Grössenordnung von 2–3 mm haben, und dass die Löcher 40% bis 64% der Fläche der Platte umfassen.

5. Backofen nach einem der Ansprüche 1–4, dadurch gekennzeichnet, dass die Rückseite des Ofens mit einem Satz Türen symmetrisch zu den kleinen Türen (7, 8, 9 und 10) ausgerüstet ist.

FIG.1

FIG.2

FIG.3

35

12

17

15

11

12

18

18

16

19

32

34

31

21

22

FIG.4

FIG.5